Europäisches Patentamt

European Patent Office

Office européen des brevets

(19)

(11) **EP 1 249 172 A1**

(12) # DEMANDE DE BREVET EUROPEEN

(43) Date de publication:
**16.10.2002 Bulletin 2002/42**

(51) Int Cl.[7]: **A23D 9/00**, C11C 3/10,
A23L 1/40

(21) Numéro de dépôt: **01109108.9**

(22) Date de dépôt: **12.04.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **SOCIETE DES PRODUITS NESTLE S.A.**
**1800 Vevey (CH)**

(72) Inventeur: **Bertoli, Constantin**
**8472 Seuzach (CH)**

(74) Mandataire: **Wavre, Claude-Alain et al**
**55, avenue Nestlé**
**1800 Vevey (CH)**

(54) **Matière grasse**

(57) Matière grasse substantiellement dépourvue d'acide gras trans et dont le profil SFC est similaire à celui de l'huile de palme hydrogénée. Une telle matière grasse contient de préférence moins de 3% d'acides gras trans et présente des propriétés hypocholestérolé- miantes.

Procédé de fabrication d'un telle matière grasse par interestérification d'une matière grasse d'origine végétale native et d'une matière grasse d'origine végétale totalement hydrogénée.

Figure 1 : Domaine de profil SFC de la matière grasse selon l'invention.

## Description

La présente invention concerne une matière grasse substantiellement dépourvue d'acides gras trans ainsi qu'un procédé de fabrication d'une telle matière grasse.

La matière grasse entre dans la composition de nombreux produits alimentaires élaborés déshydratés ou à humidité intermédiaire tels que des bouillons gras, des soupes en poudre ou des aides culinaires sous forme de tablettes, de poudre ou granulé, par exemple. La matière grasse joue le rôle d'agent de cohésion ainsi que d'améliorant de dissolution et de dispersion des différents liants.

En tant qu'agent de cohésion, la matière grasse entrant dans la composition des produits tels qu'exposés ci-dessus doit présenter une teneur en matière solide en fonction de la température, autrement dit un profil SFC (Solid Fat Content) particulier assurant ainsi cohésion à température ambiante, à savoir un SFC de l'ordre de 80% à température ambiante, et une fonte rapide au-delà, à savoir un SFC inférieur à environ 20% aux alentours de 40 - 50°C.

Le SFC d'une matière grasse, définit, à une température donnée, la proportion de matière grasse se présentant sous forme solide. En mesurant le SFC sur une gamme de température allant de 0°C jusqu'à la fonte, on obtient le profil SFC caractéristique de la matière grasse étudiée.

Ainsi, pour les applications culinaires telles que celles mentionnées précédemment, les matières grasses mises en oeuvre sont généralement des matières grasses partiellement hydrogénées. Parmi les matières grasses hydrogénées utilisées, on peut citer l'huile de palme partiellement hydrogénée (HPH), l'huile de coton partiellement hydrogénée (HCH), l'huile de soja partiellement hydrogénée (HSH), voire des graisses animales telles que du suif de boeuf ou de la graisse de poule. Les graisses de ce genre présentent une plage de fonte aux alentours de 45-46°C et un SFC de l'ordre de 50% aux environs de 30°C et supérieur à 60-70% aux alentours de 20°C. Le profil SFC, les plages de fontes et les proportions de solides correspondantes sont généralement fonction du degré d'hydrogénation de ladite matière grasse. L'allure générale de ces courbes SFC en fonction de la température correspond plus ou moins à une sigmoïde décroissante. Le taux de solide ou SFC est ainsi de l'ordre de 80 à 100% entre 0 et 20°C, compris entre 40 et 80% à une température de l'ordre de 25 à 35°C et inférieur à environ 30% pour des températures supérieures à environ 40°C.

Les procédés d'hydrogénation des matières grasses présentent l'inconvénient de générer des acides gras sous la forme trans. Ces acides gras trans sont des isomères géométriques et/ou de position d'acides gras insaturés naturellement présents dans les graisses en forme cis et formés lors des procédés d'hydrogénation des corps gras. La technique d'hydrogénation permet d'augmenter la stabilité à l'oxydation des matières grasses et leur confère aussi une texture plus ferme en augmentant la plage de fusion.

Dans le cadre de l'hypothèse de l'influence du métabolisme lipidique sur le risque coronarien, les acides gras trans sont considérés comme un facteur de risque via leur influence sur ce métabolisme. Bien qu'aucune preuve scientifique tende à démontrer un effet pathologique direct, une importante consommation d'acides gras trans entraînerait l'augmentation des concentrations plasmatiques en cholestérol total (TC), cholestérol lié aux lipoprotéines de basse densité (LDL-C) et triglycérides (TG), tout en diminuant la concentration du cholestérol lié aux lipoprotéines de haute densité (HDL-C) (Dictenberg J.B. et al ; Nutritional Biochemistry 6 : 353-361 ; 1995).

Parmi les différentes huiles hydrogénées utilisées en industrie alimentaire, l'huile de palme partiellement hydrogénée (HPH) peut être utilisée dans la fabrication de produits alimentaires du type bouillons, sauces, soupes, mélanges pulvérulents. Elle présente en effet un profil SFC intéressant pour ce type d'applications mais cependant son contenu en acide gras trans est de l'ordre de 26%. Compte tenu de la possible influence de ces acides gras trans sur le métabolisme lipidique, une alternative à cette matière grasse s'avère souhaitable. Il est souhaitable aussi de trouver une matière grasse peu onéreuse et présentant de plus des propriétés technologiques et rhéologiques les plus proches possibles de celles de l'huile de palme hydrogénée.

Le but de la présente invention consiste à fournir un procédé économique de fabrication d'une matière grasse présentant un profil SFC le plus proche possible de celui de l'huile de palme hydrogénée et étant substantiellement dépourvue d'acides gras trans.

A cette fin, le procédé selon la présente invention comprend les étapes de :

- chauffer jusqu'à liquéfaction un mélange comprenant une matière grasse d'origine végétale native et une matière grasse d'origine végétale totalement hydrogénée,
- et réaliser une interestérification chimique du mélange en présence d'un catalyseur, à une température et pendant un temps suffisants afin d'assurer une équi-distribution des différents acides gras sur les trois positions du glycérol.

Suite à l'interestérification, la matière grasse obtenue peut être soumise à des étapes classiques de raffinage, d'élimination du catalyseur, de lavage et/ou de décoloration selon les techniques traditionnelles de l'industrie bien connues de l'homme du métier.

L'interestérification peut être réalisée en présence d'alcoolates, tel que le méthylate ou l'éthylate, de métaux alkalins, tels que le sodium ou le potassium, par exemple comme catalyseur dans une quantité de l'ordre de 0,1 à 1 % en poids. Cette étape d'interestérification peut être réalisée à une température comprise entre 70 et 110 °C, sous une pression de l'ordre de 2 à 15 mbar et pendant 20 minutes à 2 heures, par exemple. Le contrôle de la réaction d'interestérification se fait par la détermination de la composition en acides gras estérifiés en position sn-1, sn-2 et sn-3 du glycérol. Cette détermination de la position des acides gras sur le glycérol peut être effectuée selon la méthode IUPAC 2.210 (IUPAC ; C. Paquot, A. Hautfenne (Eds), Standard Methods for the Analysis of Oils, Fats and Derivatives. Blackwell, Oxford, 7th Edition, 1987). Ainsi la réaction d'interestérification est poussée de manière à assurer une équi-distribution des différents acides gras sur les positions sn-1, sn-2 et sn-3. Par «équi-distribution», on comprend qu'aucune position du glycérol n'est privilégiée pour l'estérification et que la distribution des acides gras sur ces différentes positions se fait de manière purement aléatoire. Ainsi, au final, obtient-on une équi-distribution de chacun des acides gras du mélange sur ces trois positions du glycérol.

Une étape d'élimination du catalyseur peut être réalisée par lavage avec 10 à 20 % d'eau aux environs de 90 °C, par exemple. Cette étape de lavage peut être répétée plusieurs fois. Cette étape permet d'arrêter la réaction et d'éliminer le catalyseur par solubilisation de ce dernier dans la phase aqueuse.

Des étapes classiques de raffinage telles que lavage, décoloration à l'aide de terres activées, par exemple suivies d'une étape de désodorisation peuvent être réalisées après l'interestérification. Ces différentes étapes de lavage, élimination de savons formés, décoloration et désodorisation peuvent être réalisées selon des techniques classiques de l'industrie des matières grasses bien connues de l'homme du métier.

La matière grasse obtenue est donc substantiellement dépourvue d'acides gras trans. Par l'expression « substantiellement dépourvue », on comprend une teneur inférieure à environ 3 %, de préférence inférieure à 1%. Il est important de noter que les traces d'acides gras trans présents dans la matière grasse obtenue selon le procédé objet de l'invention peuvent provenir d'une contamination des matières grasses du mélange initial servant à l'interestérification.

Par l'expression «matière grasse d'origine végétale native », on comprend qu'il s'agit d'une matière grasse de source végétale n'ayant subit aucune modification chimique telle qu'une hydrogénation, par exemple. Il peut s'agir ainsi de manière préférentielle d'huile de palme, par exemple, mais aussi d'une fraction d'huile de palme, telle que la stéarine d'huile de palme obtenue par fractionnement de cette même huile de palme, par exemple.

De même par l'expression «matière grasse d'origine végétale totalement hydrogénée », il s'agit d'une matière grasse d'origine végétale ayant subi une hydrogénation totale. De manière préférentielle cette matière grasse d'origine végétale totalement hydrogénée sera d'origine identique à la matière grasse d'origine végétale native. Il pourra ainsi s'agir d'huile de palme totalement hydrogénée, par exemple.

Les quantités relatives des deux matières grasses du mélange interestérifié selon le présent procédé peuvent être comprises entre 20:80 et 80:20, préférentiellement entre 40:60 et 60:40, plus préférentiellement encore entre 45:55 et 55:45.

La matière grasse obtenue selon le présent procédé peut faire l'objet d'une étape subséquente de fractionnement de manière à modifier ses caractéristiques rhéologiques, ou pour le moins son profil SFC. On peut ainsi diminuer le SFC aux environs de 50°C, ce qui tend aussi à le diminuer dans la gamme 0-20°C.

C'est finalement aussi un second objet de la présente invention que de fournir une matière grasse présentant une équi-distribution des différents acides gras sur les trois positions sn-1, sn-2 et sn-3 du glycérol, substantiellement dépourvue d'acides gras trans et dont le SFC en fonction de la température *t* correspond à l'équation suivante :

$$SFC = \frac{a}{1 + \exp^{b(t-c)}}$$

dans laquelle : a est compris entre environ 80 et 100
    b est compris entre environ 0,1 et 0,3, de préférence entre environ 0,15 et 0,3,
    et c est compris entre environ 20 et 45, de préférence entre environ 25 et 40,
la température *t* variant entre environ 0 et 60°C.

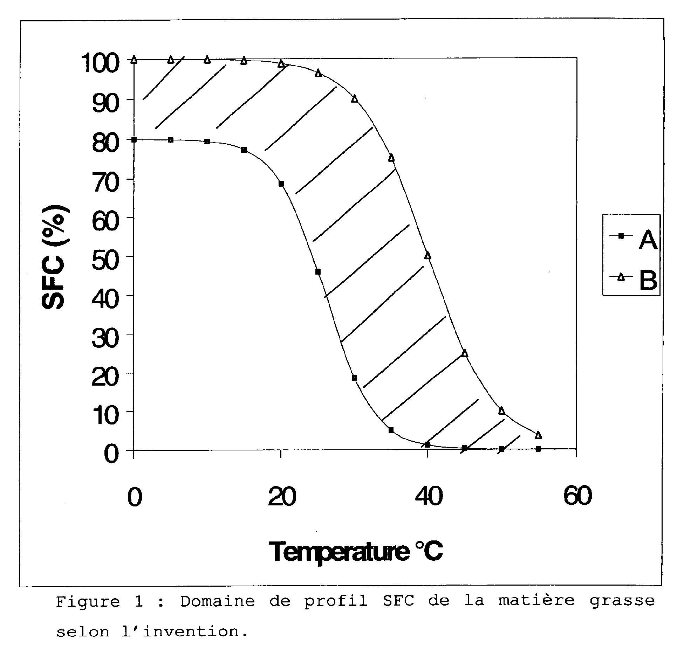

A titre indicatif, le domaine de profil SFC de la matière grasse selon l'invention, en fonction de la température, est figuré entre les deux courbes A et B représentées à la figure 1.

Par l'expression «équi-distribution des différents acides gras sur les trois positions sn-1, sn-2 et sn-3 du glycérol », on comprend donc qu'aucun des trois résidus alcooliques du glycérol n'est privilégié pour l'estérification et que la distribution des acides gras sur ces différents résidus se fait de manière purement aléatoire, ce qui mène finalement à une composition similaire des trois positions en les différents acides gras.

Par l'expression «substantiellement dépourvue en acides gras trans », on comprendra que la matière grasse selon l'invention comprend moins de 3% d'acides gras trans et préférentiellement moins de 1%.

La mesure du SFC de la matière grasse selon l'invention peut être réalisée par spectroscopie de résonance magnétique nucléaire pulsée à basse résolution selon la méthode IUPAC 2.150 à l'aide analyseur RMN NMS 120 Minispec (Bruker, Rheinstetten, DE) modifiée en ce que l'étape de stabilisation thermique à 0°C avant mesure du SFC a cette température est réalisée pendant au moins 8 heures au lieu d'une heure .

La matière grasse objet de la présente invention présente ainsi une composition globale en acides gras saturés de l'ordre de 65 à 75%, en acides gras mono-insaturés de l'ordre de 20 à 30% et en acides gras poly-insaturés de l'ordre de 2 à 6%, la teneur en acides gras trans étant inférieure à 3%, préférentiellement inférieure à 1%.

De manière surprenante, il a été remarqué que la matière grasse selon l'invention présente des propriétés nutritionnelles remarquables. Ainsi, comparé à l'HPH, qu'elle est destinée à remplacer dans les produits alimentaires, la matière grasse selon l'invention exerce un effet positif sur le métabolisme lipidique et sur le métabolisme du cholestérol en particulier, lorsqu'elle est consommée à la place de l'HPH.

Ainsi, la présente invention concerne-t-elle une matière alimentaire grasse présentant des propriétés hypocholestérolémiantes. Par l'expression «propriétés hypocholestérolémiantes » de la présente matière grasse, on comprend que cette matière grasse est capable de diminuer les taux de cholestérol sérique et des lipo-protéines associées au cholestérol, et ceci par rapport aux taux observés lors de la consommation de HPH.

C'est aussi un objet de la présente invention que de fournir un produit alimentaire comprenant une matière grasse selon l'invention en quantité efficace pour réduire le taux de cholestérol.

L'influence de la matière grasse selon l'invention sur le métabolisme lipidique a donc été comparée à celle de l'HPH. Les deux types de matière grasse (matière grasse selon l'invention et HPH) ont été administrés à des gerbilles, une espèce animale particulièrement adaptée aux études nutritionnelles sur les matières grasses de par sa sensibilité à la composition lipidique des régimes alimentaires. L'étude métabolique et les résultats obtenus sont exposés plus en détail ci-après.

ETUDE METABOLIQUE

Deux groupes de gerbilles ont été nourris pendant 8 semaines à l'aide d'un régime (I ou II) tel qu'indiqué au tableau 1.

Tableau 1 :

| Composition des régimes. | | |
|---|---|---|
| | Régime I | Régime II |
| Caséine (%) | 20 | 20 |
| Dextrose (%) | 20 | 20 |
| Amidon de maïs (%) | 23,4 | 23,4 |
| Cellulose (%) | 10 | 10 |
| HPH (%) | 20 | - |
| MG selon invention (%) | - | 20 |
| Minéraux (%) | 5 | 5 |
| Vitamines (%) | 1,2 | 1,2 |
| Chlorure de choline (%) | 0,3 | 0,3 |
| Cholestérol (%) | 0,08 | 0,08 |

Les deux régimes (I et II) ont été supplémentés avec de l'huile de soja de manière à assurer un apport suffisant, et identique pour les deux régimes, en acides gras poly-insaturés, à savoir 6% final.

Après 8 semaines de régime selon le tableau 1, les animaux sont sacrifiés et on recueille différentes données qui sont rassemblées dans le tableau 2.

On peut ainsi remarquer que l'application du régime à base de matière grasse selon l'invention, s'il n'induit aucune modification en ce qui concerne la prise pondérale des animaux, modifie de manière drastique le profil lipidique sanguin. Ainsi, la concentration en triglycérides est de plus de 2,5 fois supérieure avec le régime HPH par rapport au régime avec la matière grasse selon l'invention. Le taux de cholestérol sérique total est lui aussi 1,6 fois supérieur avec le régime à base de HPH.

Tableau 2:

| Influence des régimes sur le profil cholestérique. | | |
|---|---|---|
| | Régime I (HPH) | Régime II (MG selon invention) |
| Poids initial (g) | 53 | 54 |
| Poids final (g) | 74 | 72 |
| Cholestérol total sérique (mg/dl) | 226 | 167 |
| Tri-glycerides sériques (mg/dl) | 322 | 123 |
| HDL-Cholestérol sérique (mg/dl) | 68 | 86 |
| LDL-Cholestérol sérique (mg/dl) | 60 | 50 |
| VLDL-Cholestérol sérique (mg/dl) | 60 | 39 |

En ce qui concerne les concentrations en lipo-protéines il apparaît que le HDL-Cholestérol (ou «bon cholestérol ») est augmenté significativement d'un facteur 1,26 et en ce qui concerne les lipoprotéines de basse densité, LDL-Cholestérol et VLDL-Cholestérol, (ou «mauvais cholestérol ») leurs concentrations apparaissent diminuées d'un facteur 1,2 et 1,5, respectivement.

Il apparaît ainsi clairement qu'un régime riche en matière grasse selon l'invention représente un moyen efficace de réduction de la concentration totale en cholestérol ainsi que la concentration en cholestérol liée aux lipoprotéines de basse densité, ceci en comparaison avec un régime riche en HPH. Aussi, même si de tels résultats expérimentaux ne sont pas directement transposables à l'homme, ils n'en fournissent pas moins des indications utiles.

Ainsi, la matière grasse selon l'invention présente-t-elle le double avantage de constituer non seulement une alternative technologique idéale à l'HPH par le fait qu'elle possède des propriétés technologiques et rhéologiques tout à fait similaires et que de plus elle possède des fonctionnalités nutritionnelles particulièrement intéressantes.

EXEMPLE 1 Procédé de préparation de matière grasse.

Un mélange comprenant 58,5 kg (45%) d'huile de palme totalement hydrogénée et 71,5 kg (55%) d'huile de palme est chauffé et séché par chauffage aux environs de 90°C sous vide partiel (10 mbar) pendant 30 minutes.

L'étape d'interestérification est assurée par addition de 0,3 % en poids de $C_2H_5ONa$ et le mélange est maintenu à 85°C pendant 1 heure sous une pression de 10 mbar. Un tel traitement permet de réaliser une interestérification totale assurant la répartition aléatoire des acides gras sur les trois positions du glycérol.

Le mélange est ensuite lavé deux fois par ajout de 15 % d'eau, ce qui permet d'arrêter la réaction par solubilisation du catalyseur, d'éliminer ce dernier et d'éliminer la majeure partie des savons formés.

Le mélange est ensuite soumis à une décoloration à l'aide de 0,5 % de terres décolorantes (Tonsil Optimum® FF) à 85°C pendant 20 minutes. Les terres décolorantes sont éliminées par filtration à 75°C.

Enfin le mélange est désodorisé par chauffage à 190°C pendant 3 heures.

Le produit obtenu encore fluide est emballé à 50°C puis refroidi jusqu'à solidification.

EXEMPLE 2 Aide culinaire

Les ingrédients pulvérulents suivants sont mélangés dans un mixer HOBART :

| Sel fin | 400 g |
|---|---|
| Glutamate | 200 g |
| Sucre | 30 g |
| Farine de peau de poulet | 100 g |
| Amidon de pomme de terre | 20 g |
| Poudre d'oignon | 50 g |
| Poudre d'ail | 10 g |

La matière grasse (140 g de matière grasse selon l'invention (voir exemple 1) et 50 g de graisse de poulet) est fondue à une température de l'ordre de 60°C et ajoutée au mélange des pulvérulents. Le mélange obtenu est homogénéisé dans le mélangeur HOBART puis compacté dans des moules cubiques.

On obtient ainsi des cubes de bouillons dont les propriétés rhéologiques sont similaires à celles de cubes réalisés avec de l'huile de palme partiellement hydrogénée.

EXEMPLE 3 Matière alimentaire de base instantanément dispersable dans l'eau

On prépare séparément un prémélange de 17 % d'amidon de pomme de terre et 47 % de farine de blé. On fond à 60 °C 37% de graisse selon l'invention dans une cuve thermostatée et on y ajoute le prémélange d'amidon et de farine tout en remuant. De cette cuve, la masse fondue est déposée par un tambour de chargement, par la bas, sur un tambour de refroidissement. Le produit refroidi est détaché du cylindre par un couteau. Ces flocons peuvent être incorporés dans des mélanges secs pour soupes ou sauces. On obtient ainsi des soupes et sauces dont les propriétés rhéologiques sont similaires à celles de produits réalisés avec de l'huile de palme partiellement hydrogénée.

## Revendications

1. Matière grasse, **caractérisée en ce qu'**elle présente une équi-distribution des différents acides gras sur les trois positions sn-1, sn-2 et sn-3 du glycérol, elle est substantiellement dépourvue d'acides gras trans et son SFC en fonction de la température $t$ correspond à l'équation suivante :

$$SFC = \frac{a}{1 + \exp^{b(t-c)}}$$

dans laquelle :    a est compris entre 80 et 100
                     b est compris entre 0,15 et 0,3
                     et c est compris entre 25 et 40,

la température $t$ variant entre 0 et 60°C.

2. Matière grasse selon la revendication 1, **caractérisée en ce qu'**elle contient moins de 3% d'acides gras trans.

3. Matière grasse selon la revendication 1, **caractérisée en ce qu'**elle comprend 65 à 75% d'acides gras saturés, 20 à 30% d'acides gras mono-insaturés, 2 à 6% d'acides gras poly-insaturés et moins de 3% d'acides gras trans.

4. Matière grasse selon une des revendications 1 à 3, **caractérisée en ce qu'**elle présente des propriétés hypocholestérolémiantes.

5. Utilisation d'une matière grasse selon l'une des revendications 1 à 4 pour la fabrication d'un produit alimentaire.

6. Produit alimentaire comprenant une matière grasse selon une des revendications 1 à 4 en quantité efficace pour réduire le taux de cholestérol.

7. Procédé de fabrication d'une matière grasse substanciellement dépourvue d'acides gras trans, comprenant les étapes suivantes :

   - on chauffe jusqu'à liquéfaction un mélange comprenant une matière grasse d'origine végétale native et une matière grasse d'origine végétale totalement hydrogénée,
   - on réalise une interestérification chimique du mélange en présence d'un catalyseur, à une température et pendant un temps suffisants pour assurer une équi-distribution des différents acides gras sur les trois positions du glycérol.

8. Procédé selon la revendication 7, **caractérisé en ce que** l'étape d'interestérification est réalisée à une température comprise entre 70 et 110 °C, sous une pression de 2 à 15 mbar et pendant 20 minutes à 2 heures.

9. Procédé selon la revendication 7, **caractérisé en ce que** la matière grasse d'origine végétale native est choisie dans le groupé formé par l'huile de palme et la stéarine d'huile de palme.

10. Procédé selon la revendication 7, **caractérisé en ce que** la matière grasse d'origine végétale totalement hydrogénée est d'origine identique à la matière grasse d'origine végétale native.

11. Procédé selon la revendication 7, **caractérisé en ce que** la matière grasse d'origine végétale totalement hydrogénée est une huile de palme totalement hydrogénée.

Figure 1 : Domaine de profil SFC de la matière grasse selon l'invention.

EP 1 249 172 A1

Office européen des brevets

**RAPPORT DE RECHERCHE EUROPEENNE**

Numéro de la demande

EP 01 10 9108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | GB 1 111 324 A (AARHUS OLIEFABRIK AS) 24 avril 1968 (1968-04-24) * page 2, ligne 11 - ligne 15 * * exemples I-III * * revendications 1,8 * | 1-3,5, 7-11 | A23D9/00 C11C3/10 A23L1/40 |
| X | V. PETRAUSKAITE ET AL.: "Physical and chemical properties of trans-free fats produced by chemical interesterification of vegetable oil blends" JOURNAL OF THE AMERICAN OIL CHEMISTS' SOCIETY., vol. 75, no. 4, 1998, pages 489-493, XP002177729 AMERICAN OIL CHEMISTS' SOCIETY. CHAMPAIGN., US ISSN: 0003-021X * le document en entier * | 7,8,10 | |
| X | ZEITOUN M A M: "PHYSICAL PROPERTIES OF INTERESTERIFIED FAT BLENDS" JOURNAL OF THE AMERICAN OIL CHEMISTS' SOCIETY, AMERICAN OIL CHEMISTS' SOCIETY. CHAMPAIGN, US, vol. 70, no. 5, 1 mai 1993 (1993-05-01), pages 467-471, XP000372582 ISSN: 0003-021X * le document en entier * | 7,8,10 | DOMAINES TECHNIQUES RECHERCHES (Int.Cl.7) A23D C11C A23L |

-/--

Le présent rapport a été établi pour toutes les revendications

| Lieu de la recherche | Date d'achèvement de la recherche | Examinateur |
|---|---|---|
| LA HAYE | 18 septembre 2001 | Dekeirel, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

9

# EP 1 249 172 A1

**Office européen des brevets** **RAPPORT DE RECHERCHE EUROPEENNE**

Numéro de la demande
EP 01 10 9108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | LIST G R ET AL: "MARGARINE AND SHORTENING OILS BY INTERESTERIFICATION OF LIQUID AND TRISATURATED TRIGLYCERIDES1" JOURNAL OF THE AMERICAN OIL CHEMISTS' SOCIETY, AMERICAN OIL CHEMISTS' SOCIETY. CHAMPAIGN, US, vol. 72, no. 3, 1 mars 1995 (1995-03-01), pages 379-382, XP000497062 ISSN: 0003-021X * le document en entier * | 7,8,10 | |
| X | HURTOVA S ET AL: "RANDOM INTERESTERIFICATION OF FAT BLENDS WITH ALKALI CATALYSTS" FETT - LIPID, WILEY-VCH VERLAG,WEINHEIM, DE, vol. 98, no. 2, 1 février 1996 (1996-02-01), pages 60-65, XP000556920 ISSN: 0931-5985 * le document en entier * | 7,8 | |
| A | EP 0 823 473 A (CPC DEUTSCHLAND GMBH ;CPC INTERNATIONAL INC (US)) 11 février 1998 (1998-02-11) * page 2, ligne 11 - page 3, ligne 12 * * revendications 1,2,5,6 * | 1,5,7 | DOMAINES TECHNIQUES RECHERCHES (Int.Cl.7) |
| A | DATABASE WPI Section Ch, Week 199306 Derwent Publications Ltd., London, GB; Class D13, AN 1993-049796 XP002047061 & JP 05 001297 A (FUJI OIL CO LTD), 8 janvier 1993 (1993-01-08) * abrégé * | 1,5,7 | |

-/--

Le présent rapport a été établi pour toutes les revendications

| Lieu de la recherche | Date d'achèvement de la recherche | Examinateur |
|---|---|---|
| LA HAYE | 18 septembre 2001 | Dekeirel, M |

10

**RAPPORT DE RECHERCHE EUROPEENNE**  Numéro de la demande

EP 01 10 9108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | PATENT ABSTRACTS OF JAPAN vol. 1999, no. 11, 30 septembre 1999 (1999-09-30) & JP 11 155483 A (ASAHI DENKA KOGYO KK), 15 juin 1999 (1999-06-15) * abrégé * | 1,5,7 | |
| A | EP 0 229 938 A (UNILEVER NV ;UNILEVER PLC (GB)) 29 juillet 1987 (1987-07-29) * page 2, ligne 39 – ligne 55 * | 1,5 | |
| | | | **DOMAINES TECHNIQUES RECHERCHES** (Int.Cl.7) |

Le présent rapport a été établi pour toutes les revendications

| Lieu de la recherche | Date d'achèvement de la recherche | Examinateur |
|---|---|---|
| LA HAYE | 18 septembre 2001 | Dekeirel, M |

EP 1 249 172 A1

**ANNEXE AU RAPPORT DE RECHERCHE EUROPEENNE**
**RELATIF A LA DEMANDE DE BREVET EUROPEEN NO.**       EP 01 10 9108

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-09-2001

| Document brevet cité au rapport de recherche | | | Date de publication | Membre(s) de la famille de brevet(s) | | Date de publication |
|---|---|---|---|---|---|---|
| GB | 1111324 | A | 24-04-1968 | AUCUN | | |
| EP | 0823473 | A | 11-02-1998 | DE | 19632088 A1 | 12-02-1998 |
| | | | | AT | 190348 T | 15-03-2000 |
| | | | | CA | 2212467 A1 | 08-02-1998 |
| | | | | CN | 1176300 A | 18-03-1998 |
| | | | | CZ | 9702522 A3 | 18-02-1998 |
| | | | | DE | 69701371 D1 | 13-04-2000 |
| | | | | DE | 69701371 T2 | 21-09-2000 |
| | | | | DK | 823473 T3 | 24-07-2000 |
| | | | | EP | 0823473 A1 | 11-02-1998 |
| | | | | ES | 2146053 T3 | 16-07-2000 |
| | | | | GR | 3033475 T3 | 29-09-2000 |
| | | | | HU | 9701374 A2 | 28-04-1998 |
| | | | | IL | 121493 A | 16-07-2000 |
| | | | | JP | 10102085 A | 21-04-1998 |
| | | | | NO | 973642 A | 09-02-1998 |
| | | | | PL | 321536 A1 | 16-02-1998 |
| | | | | PT | 823473 T | 31-07-2000 |
| | | | | SI | 823473 T1 | 31-08-2000 |
| | | | | SK | 108097 A3 | 04-03-1998 |
| | | | | TR | 9700766 A2 | 21-02-1998 |
| JP | 5001297 | A | 08-01-1993 | JP | 2503811 B2 | 05-06-1996 |
| JP | 11155483 | A | 15-06-1999 | AUCUN | | |
| EP | 0229938 | A | 29-07-1987 | AT | 41587 T | 15-04-1989 |
| | | | | AU | 580460 B2 | 12-01-1989 |
| | | | | AU | 6659486 A | 25-06-1987 |
| | | | | CA | 1289807 A1 | 01-10-1991 |
| | | | | DE | 3662483 D1 | 27-04-1989 |
| | | | | EP | 0229938 A1 | 29-07-1987 |
| | | | | FI | 865115 A ,B, | 21-06-1987 |
| | | | | GR | 3000075 T3 | 31-10-1990 |
| | | | | JP | 1865347 C | 26-08-1994 |
| | | | | JP | 5075367 B | 20-10-1993 |
| | | | | JP | 62201541 A | 05-09-1987 |
| | | | | NO | 865140 A ,B, | 22-06-1987 |
| | | | | NZ | 218629 A | 29-11-1988 |
| | | | | US | 4810518 A | 07-03-1989 |
| | | | | ZA | 8609570 A | 31-08-1988 |

EPO FORM P0460

Pour tout renseignement concernant cette annexe : voir Journal Officiel de l'Office européen des brevets, No.12/82